# EUROPEAN PATENT APPLICATION

(11) **EP 2 375 857 A1**
(43) Date of publication of application: **12.10.2011**
(21) Application number: 10159338.2
(22) Date of filing: 08.04.2010
(51) Int. Cl.: H05B 33/08

(54) **Transformer arrangement for preventing optoelectronics components from damaging**

(71) Applicant: Helvar Oy Ab, 03600 Karkkila (FI)
(72) Inventor: Naakka, Harri, 01360, Vantaa (FI); Hämäläinen, Jussi, 00300, Helsinki (FI)
(74) Representative: LEITZINGER OY

(57) **Abstract**

The object of the invention is a transformer circuit arrangement comprising a transformer (100), a primary circuit (102) on the primary side of the transformer, and a secondary circuit (104) on the secondary side of the transformer, and the arrangement comprises the transformer (100) for transferring electrical energy from the primary circuit (102) to the secondary circuit (104). The secondary circuit (104) comprises current measuring electronics (108) for performing current monitoring operations, which current measuring electronics has been arranged to react to frequencies essentially lower than 100 Hz, and voltage measuring electronics (110) for performing voltage monitoring operations, and at least one optoelectronics unit (114) for performing an optoelectrical function. To the secondary circuit has been integrated a protection unit (111) in serial connection to the at least one optoelectronics unit for protecting the optoelectronics unit (114) from substantially high secondary circuit current value signals comprising frequencies higher than said frequencies to which the current measuring electronics (108) has been arranged to react.

## Description

### The field of the invention

A couple of electric devices, for example different kind of lighting devices, utilize some kind of transformer circuit electronics.

### The state of the art

A transformer is a device that transfers electrical energy from one circuit, ie primary circuit, to another, ie secondary circuit, through inductively coupled conductors, which are the transformer's coils. A varying current in the primary winding creates a varying magnetic flux in the transformer's core, and thus a varying magnetic field through the secondary winding. This varying magnetic field induces a varying electromotive force (EMF), ie voltage in the secondary winding.

The secondary circuit is a constant current device. In the normal operation there is a need for both voltage measurement arrangement and current measurement arrangement for measuring both voltage and current of the load. Frequency response of said voltage measurement has to be fast, and frequency response of said current measurement has to be slow, because current measurement must not react to wave signals or wave signal parts caused by mains voltage in normal operation of the secondary circuit. In the state of the art said voltage measurement has been arranged by a first amplifier and said current measurement has been arranged by a second amplifier.

Anyway in power failure situations and/or in sensor applications occur current peaks. For example the current peak exists in the secondary circuit, when a load such as an optoelectronics unit connects again on the circuit in power failure situation. Thus there exists also a need for fast response current measurement to prevent current peaks from causing optoelectronics unit damages, for example light emitting diode (LED) damages, thus resulting as failures in the circuit operation and other additional costs, because damaged LEDs have to be replaced with new ones. A prior art solution to this fast response current measurement is the use of an third amplifier, which, first of all, is an expensive solution.

### Short description of the invention

The object of the invention is to accomplish a transformer circuit arrangement, in which is successfully and with reasonable costs minimized the risk of optoelectronics unit damage. This is achieved by a transformer circuit arrangement comprising a transformer, a primary circuit on the primary side of the transformer, and a secondary circuit on the secondary side of the transformer, and the arrangement comprises the transformer for transferring electrical energy from the primary circuit to the secondary circuit. The secondary circuit comprises current measuring electronics for performing current monitoring operations, which current measuring electronics has been arranged to react to frequencies essentially lower than 100 Hz, and voltage measuring electronics for performing voltage monitoring operations, and at least one optoelectronics unit for performing an optoelectrical function, and to the secondary circuit has been integrated a protection unit in serial connection to the at least one optoelectronics unit for protecting the optoelectronics unit from substantially high secondary circuit current value signals comprising frequencies higher than said frequencies to which the current measuring electronics has been arranged to react.

The invention is based on that the secondary circuit comprises current measuring electronics for performing current monitoring operations, which current measuring electronics has been arranged to react to frequencies essentially lower than 100 Hz, and to the secondary circuit has been integrated a protection unit in serial connection to the at least one optoelectronics unit for protecting the optoelectronics unit from substantially high secondary circuit current value signals comprising frequencies higher than said frequencies to which the current measuring electronics has been arranged to react.

The benefit of the invention is that it provides a convenient and relatively low cost implementation for preventing optoelectronics unit damages on the secondary side of the transformer circuitry.

### Short description of figures

- Figure 1: presents a block diagram according to an exemplary embodiment of the invention.
- Figure 2: presents a detailed example of a preferred embodiment according to the invention.

### Detailed description of the invention

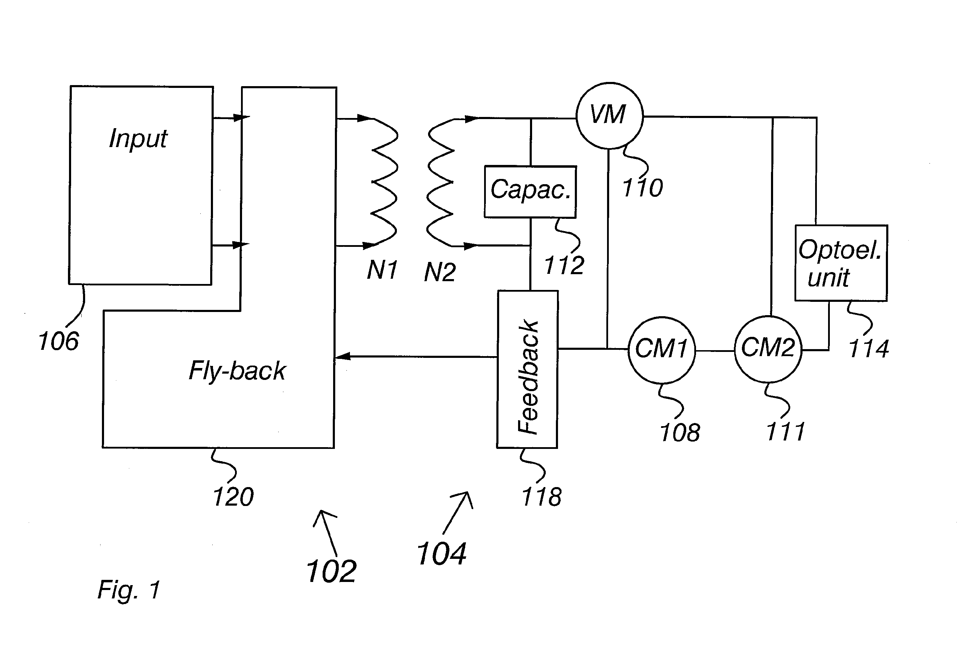

In figure 1 is presented a block diagram according to an exemplary embodiment of the invention. A transformer 100 is a device that transfers electrical energy from one circuit to another circuit through inductively coupled conductors N1, N2. The transformer circuit arrangement in figure 1 comprises a primary circuit 102 on the primary side of the transformer 100, and a secondary circuit 104 on the secondary side of the transformer 100, and the transformer transfers electrical energy from the primary circuit to the secondary circuit. A block 106 in the primary circuit comprises connection means for input voltage, which is for example 230 V and 50 Hz alternating voltage. The block 106 in the primary circuit may also comprise at least one filter for performing electrical filtering operations, for example RFI (Radio Frequency Interference) filtering, and a rectifier for converting alternating current (AC) to direct current (DC), but the block 106 may also have a different content depending on the embodiment, in which the invention is utilized.

As presented in figure 1 the secondary circuit 104 according to the invention comprises current measuring electronics 108 for performing current monitoring operations, which current measuring electronics has been arranged to react to frequencies essentially lower than 100 Hz, so that said current measuring electronics shall not react for example to mains voltage ripple frequencies. The secondary circuit also comprises voltage measuring electronics 110 for performing voltage monitoring operations for example in open circuit situations. At least one optoelectronics unit 114 on the secondary circuit 104 performs optoelectrical functions, such as lighting or signalling. The optoelectronics unit 114 comprises one light emitting diode (LED) or preferably more LEDs. Also the optoelectronics unit 114 can comprise for example at least one PIN, i.e. intrinsic barrier, diode, and/or at least one laser diode in order to, for example, perform transceiver functions as optoelectrical functions. A protection unit 111 has been integrated in serial connection to the at least one optoelectronics unit for protecting the optoelectronics unit 114 from substantially high secondary circuit current value signals comprising frequencies higher than said frequencies to which the current measuring electronics 108 has been arranged to react. Furthermore, at least one capacitive element 112 can be located on the secondary circuit for realizing energy storage function, i.e. capacitive feature on the secondary circuit 104.

Furthermore the arrangement in figure 1 may comprise between the primary circuit 102 and the secondary circuit 104 a feedback arrangement 118 for providing information from the secondary side to the primary side. This information may include for example voltage and/or current information of the secondary circuit 104, which information is provided to the primary circuit for example through an optoelectronics coupling, which the feedback arrangement 118 may comprise. The primary circuit 102 may comprise a fly-back electronics 120 for receiving said provided information from the secondary circuit 104 via the feedback arrangement 118, and for utilizing the received information in the operation of the transformer circuitry.

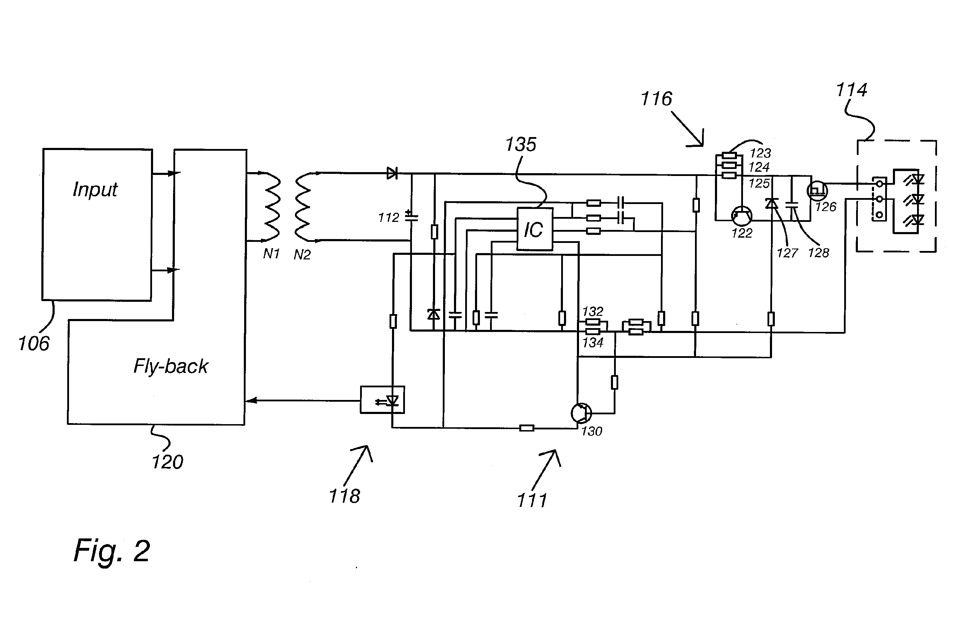

Above presented and related to figure 1 applies also to figure 2, but in figure 2 is presented a detailed and exemplary circuit diagram of a preferred embodiment according to the present invention. The optoelectronics unit 114 comprises at least three light emitting diodes (LED) having a need for essentially higher voltage and power values on the secondary circuit 104 than is the case with a single LED. Integrated circuit 135 comprises amplifiers, preferably operational amplifiers. The first amplifier is part of the current measuring electronics 108, and the second amplifier is part of the voltage measuring electronics 110. The protection unit 111 is an overcurrent protection unit comprising at least one bipolar transistor 130 and at least one resistor 132, 134 to perform current limitation by the bipolar transistor. The current limit value has been set by the at least one resistor 132, 134 to protect the optoelectronics unit 114 from substantially, i.e. disruptive, high current value signals. The protection unit 111 does not have an effect on secondary circuit 104 operation in normal operation conditions where current value signals are at lower current stage than the disruptive high current value signals. Said disruptive high secondary circuit 104 current value signals are caused for example in switch-on situations and/or in rapid load change situations, such as in rapid optoelectronics unit 114 change situations.

In many prior art embodiments voltage and power of the secondary circuit has been substantially low and there has not been a need for big energy storage in the secondary circuit. An increasing amount of electric device embodiments for example in lighting devices require that in the secondary circuit is utilized a substantially high voltage and power. This brings a need for bigger energy storage, ie. capacitor, in the secondary circuit. The problem is the situation when the load is first connected off from the circuit under live conditions. When the load is connected again on the circuit, a current peak exists in the circuit as electric charge discharges from the capacitor. This current peak may cause optoelectronics unit 114 damages, for example light emitting diode (LED) damages, thus resulting as failures in the circuit operation and other additional costs, because damaged leds have to be replaced with new ones.

The secondary circuit 104 in figure 2 comprises a capacitive element 112 for realizing a capacitive feature on the secondary circuit. The capacitive element 112 is preferably at least one capacitor 112. Also in figure 2, a protection unit 116 has been connected in serial connection to the at least one capacitor 112 for protecting said at least one optoelectronics unit 114 from high secondary circuit voltage and/or current values. For example a peak current value exists because of discharge of the at least one capacitor 112. A typical situation for this is when the optoelectronics unit 114 is switched on to the secondary circuit 104.

The protection unit 116, in figure 2, is an overcurrent protection unit comprising at least one bipolar transistor 122, at least one and in this example three resistors 123, 124, 125, diode 127, preferably a zener diode, which is a special diode used to maintain a fixed voltage across its terminals, capacitor 128 and at least one field-effect (FET) transistor 126 for utilizing the emitter-base threshold voltage of the bipolar transistor, ie. cirka 0,7 V, to perform current limitation by the FET transistor, the current limit value being set by the resistors 123, 124, 125. When a discharge of the capacitor 112 produces in the protection unit 116 a voltage bigger than the emitter-base threshold voltage of the bipolar transistor, the FET transistor adapts to linear operation and LED current is limited according to the current limit value, which is set by the resistors 123, 124, 125.

Other transistor types (bipolars, FETs, etc) can also be used to perform the similar kind of operation as described with protection units 111, 116, but for example in protection unit 116 FET transistor is the preferred choice because the protection unit 116 circuitry comprises minimum amount of components, and furthermore, FET transistor causes minimum amount of losses in the circuitry. Also the protection unit 111, 116 circuitries can have many kind of variations to achieve objects or part of the objects of the protection units 111, 116.

Although the invention has been presented in reference to the attached figures and specification, the invention is by no means limited to those, as the invention is subject to variations within the scope allowed for by the claims.

## Claims

1. A transformer circuit arrangement comprising a transformer (100), a primary circuit (102) on the primary side of the transformer, and a secondary circuit (104) on the secondary side of the transformer, and the arrangement comprises the transformer (100) for transferring electrical energy from the primary circuit (102) to the secondary circuit (104), **characterized by**, that the secondary circuit (104) comprises current measuring electronics (108) for performing current monitoring operations, which current measuring electronics has been arranged to react to frequencies essentially lower than 100 Hz, and voltage measuring electronics (110) for performing voltage monitoring operations, and at least one optoelectronics unit (114) for performing an optoelectrical function, and to the secondary circuit has been integrated a protection unit (111) in serial connection to the at least one optoelectronics unit for protecting the optoelectronics unit (114) from substantially high secondary circuit current value signals comprising frequencies higher than said frequencies to which the current measuring electronics (108) has been arranged to react.

2. A transformer circuit arrangement in accordance with claim 1, **characterized by**, that the protection unit (111) is an overcurrent protection unit comprising at least one bipolar transistor (130) and at least one resistor (132, 134) to perform current limitation by the bipolar transistor, and the current limit value has been set by the at least one resistor (132, 134) to protect the optoelectronics unit (114) from substantially high current value signals, and not to have an effect on secondary circuit (104) operation in normal operation conditions where current value signals are at lower current stage than said disruptive high current value signals.

3. A transformer circuit arrangement in accordance with claim 1, **characterized by**, that the secondary circuit (104) comprises the protection unit (111) for protecting the optoelectronics unit (114) from substantially high secondary circuit current value signals caused in switch-on situations and/or in rapid load change situations.

4. A transformer circuit arrangement in accordance with claim 1, **characterized by**, that the secondary circuit (104) comprises at least one capacitive element (112) for realizing a capacitive feature in the secondary side.

5. A transformer circuit arrangement in accordance with claim 3, **characterized by**, that to the secondary circuit has been integrated an protection unit (116) in serial connection to the at least one capacitive element (112) for protecting said at least one optoelectronics unit (114) from substantially high secondary circuit current values caused in a discharge of the at least one capacitive element (112).

6. A transformer circuit arrangement in accordance with claim 1, **characterized by**, that the arrangement comprises between the primary circuit (102) and the secondary circuit (104) a feedback arrangement (118) for providing information from the secondary side to the primary side.

7. A transformer circuit arrangement in accordance with claim 6, **characterized by**, that the arrangement comprises on the primary side a fly-back electronics (120) for utilizing the information received from the secondary side via the feedback arrangement (118).

8. A transformer circuit arrangement in accordance with claim 1, **characterized by**, that the optoelectronics unit (114) comprises at least three light emitting diodes (LEDs).
